# EUROPEAN PATENT SPECIFICATION

(11) **EP 4 307 432 B1**
(45) Date of publication and mention of the grant of the patent: **25.11.2026**
(21) Application number: 23763648.5
(22) Date of filing: 16.02.2023
(51) Int. Cl.: H01M 10/058, H01M 10/44, H01M 4/38, H01M 4/48, H01M 4/134, H01M 4/131, H01M 10/052, H01M 4/02

(54) **METHOD FOR MANUFACTURING LITHIUM SECONDARY BATTERY AND LITHIUM SECONDARY BATTERY**
VERFAHREN ZUR HERSTELLUNG EINER LITHIUMSEKUNDÄRBATTERIE UND LITHIUMSEKUNDÄRBATTERIE
PROCÉDÉ DE PRODUCTION DE BATTERIE SECONDAIRE AU LITHIUM ET BATTERIE SECONDAIRE AU LITHIUM

(30) Priority: 02.03.2022 KR 20220026509
(43) Date of publication of application: 17.01.2024
(73) Proprietor: LG Energy Solution, Ltd., Seoul 07335 (KR)
(72) Inventor: MIN, Jiwon, Daejeon 34122 (KR)
(74) Representative: Goddar, Heinz J.
(86) International application number: PCT/KR2023/002252
(87) International publication number: WO 2023/167449

(56) References cited:
- CN-A- 112 952 200
- CN-A- 113 363 422
- JP-A- 2017 027 727
- KR-A- 20200 058 906
- KR-A- 20200 084 510
- KR-A- 20220 010 386

## Description

### [Technical Field]

The present application claims priority to and the benefit of Korean Patent Application No. 10-2022-0026509 filed in the Korean Intellectual Property Office on March 2, 2022.

The present application relates to a manufacturing method of a lithium secondary battery, and a lithium secondary battery.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, according to the demand for high density energy batteries in recent years, research is being actively conducted on a method for increasing a capacity by using together a silicon-based compound such as Si/C and SiOx having a capacity 10 times or higher than that of a graphite-based material, as a negative electrode active material. However, as compared to graphite that is typically used, a silicon-based compound that is a high capacity material has a large capacity but undergoes rapid volume expansion during charging, thereby disconnecting a conductive path to degrade battery characteristics.

This is also problematic in a manufacturing process of the lithium secondary battery. In the manufacturing process of a lithium secondary battery, after an electrode assembly is formed by laminating a positive electrode, a negative electrode, and a separator, and then, impregnated in an electrolyte solution, the assembly is subjected to an activation process in order to be able to serve as a lithium secondary battery. The activation process is a process necessary for optimizing movement of ions by sufficiently dispersing the electrolyte solution in the lithium secondary battery via the charging and discharging of the lithium secondary battery under certain conditions, and for checking defects and capacity of the lithium secondary battery.

When using a carbon-based negative electrode, the activation process is a simple process of preparing the cell to operate by forming an SEI of the negative electrode. On the other hand, when using a silicon-based negative electrode, the formation of silicon in the electrode is determined by the activation C-Rate, which greatly affects the performance of the lithium secondary battery. That is, as described above, the activation process is performed in the lithium secondary battery manufacturing process, and at this time, the processes of charging and discharging the lithium secondary battery are performed. At this time, as the C-rate is increased, the activation process time can be shortened. However, due to the characteristics of the silicon-based negative electrode, non-uniformity in the negative electrode becomes severe, resulting in surface cracks and volume change to cause rather adverse effects. When the C-rate is simply lowered, the above problems can be solved, but the activation process time is rapidly increased, resulting in a decrease in productivity.

In order to solve the above problems, a method of simply increasing or decreasing the C-rate, a method of lowering and adjusting a ratio of the silicon-based active material, and the like are being considered. However, there are still limitations as a method for maximizing capacity characteristics and increasing productivity.

Therefore, there is a need for research on a method capable of, in the manufacturing process of a lithium secondary battery including a silicon-based negative electrode for maximizing capacity characteristics, preventing non-uniform charging in the negative electrode during the activation process, and minimizing surface cracks and volume change to improve performance characteristics.

CN 113 363 422 A describes a method of manufacturing a lithium-ion battery comprising a silicon-based negative electrode, the method comprising the steps of charging the battery up to 25 % state-of-charge (SOC), and then up to 100 % SOC in subsequent steps of increasing pressure on the cell.

### Prior Art Document

Japanese Patent Application Publication No. 2009-080971

### [Detailed Description of the Invention]

### [Technical Problem]

The research on a method for minimizing surface particle breakage according to charging and discharging in the activation process of the lithium secondary battery including the silicon-based negative electrode and for increasing productivity was performed, and it was found that when a degree of charging is adjusted in early and late stages of the charging, the above problems can be solved.

Accordingly, the present application relates to a manufacturing method of a lithium secondary battery capable of solving the above problems and further relates to a lithium secondary battery not forming part of the present invention and manufactured by the method.

### [Technical Solution]

An exemplary embodiment of the present specification provides a manufacturing method of a lithium secondary battery including the steps of: preparing an electrode assembly including a silicon-based negative electrode, a positive electrode, and a separator; and activating a lithium secondary battery including the electrode assembly, in which the activating includes charging and discharging the lithium secondary battery, in which the charging includes multi-stage charging from high-rate charging to low-rate charging, in which the multi-stage charging includes first charging up to SOC 25% and second charging after the SOC 25% charging, and in which the first charging includes performing charging at a constant current of 0.5C or higher.

Also provided is a lithium secondary battery not forming part of the present invention and manufactured by the manufacturing method of a lithium secondary battery according to the present application.

### [Advantageous Effects]

For the lithium secondary battery according to the present application, charging conditions in the activation process have been changed. That is, the charging in the activation process includes the multi-stage charging from high-rate charging to low-rate charging, resulting in the minimization of surface particle breakage and an improvement in productivity.

Specifically, in the activation process, as the charging C-rate is increased, the surface particle breakage occurs due to non-uniformity in the electrode. However, in the activation process of the present application, the high-rate charging is applied during the early charging and the low-rate charging is then applied. That is, it was confirmed that there was no difference in surface particle breakage even when the charging was performed at a high rate or low rate during the early charging in the activation process, and that the particle breakage occurred when the high-rate charging was performed after the early charging. Accordingly, by applying the high-rate charging during the early charging and then applying the low-rate charging, the surface particle breakage due to the charging and discharging can be minimized while not lowering the productivity because it takes the same amount of time as in the conventional activation process.

### [Brief Description of Drawings]

FIG. 1 shows a laminated structure of a lithium secondary battery according to an illustrative example not forming part of the present invention.
FIG. 2 shows a degree of particle breakage on an electrode surface according to SOC % during an activation process of high-rate charging and low-rate charging.

### <Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary battery

### [Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" means a particle size distribution, and means a particle size at the n% point in the cumulative distribution of the number of particles according to the particle size. That is, D50 is the particle size (center particle diameter, average particle diameter) at the 50% point in the cumulative distribution of the number of particles according to the particle size, D90 is the particle size at the 90% point in the cumulative distribution of the number of particles according to the particle size, and D10 is the particle size at the 10% point in the cumulative distribution of the number of particles according to the particle size. Meanwhile, the center particle size may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present application, the particle size or particle diameter may mean an average diameter or representative diameter of each grain constituting the particle.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, exemplary embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a manufacturing method of a lithium secondary battery including the steps of: preparing an electrode assembly including a silicon-based negative electrode, a positive electrode, and a separator; and activating a lithium secondary battery including the electrode assembly, in which the activating includes charging and discharging the lithium secondary battery, in which the charging includes multi-stage charging from high-rate charging to low-rate charging, in which the multi-stage charging includes first charging up to SOC 25% and second charging after the SOC 25% charging, and in which the first charging includes performing charging at a constant current of 0.5C or higher.

That is, it was confirmed that there was no difference in surface particle breakage even when the charging was performed at a high rate or low rate during the early charging in the activation process, and that the particle breakage occurred when the high-rate charging was performed after the early charging. Accordingly, the present invention relates to a manufacturing method of a lithium secondary battery in which the high-rate charging is applied during the early charging and the low-rate charging is then applied, thereby minimizing the surface particle breakage due to the charging and discharging while not lowering the productivity because it takes the same amount of time as in the conventional activation process.

Hereinafter, the manufacturing method of a lithium secondary battery will be described in more detail.

The manufacturing method of a lithium secondary battery according to the present application provides a step of preparing an electrode assembly including a silicon-based negative electrode; a positive electrode; and a separator.

The negative electrode according to the present application includes a silicon-based negative electrode material, and therefore, greatly affects the performance of the lithium secondary battery according to the C-rate during the activation process, as compared with a case in which a carbon-based or other negative electrode material is applied. Accordingly, the manufacturing method of a lithium secondary battery according to the present application includes specific multi-stage charging in the activation process described above.

In an exemplary embodiment of the present application, the silicon-based negative electrode includes a negative electrode current collector layer, and a negative electrode active material layer provided on one surface or both surfaces of the negative electrode current collector layer, and the negative electrode active material layer includes a negative electrode active material layer composition including a silicon-based active material.

In this case, the negative electrode active material layer composition may include one or more selected from the group consisting of a silicon-based active material, a negative electrode conductive material, and a negative electrode binder.

In an exemplary embodiment of the present application, there is provided the manufacturing method of a lithium secondary battery in which the silicon-based negative electrode includes a negative electrode current collector layer, and a negative electrode active material layer provided on one surface or both surfaces of the negative electrode current collector layer, the negative electrode active material layer includes a negative electrode active material layer composition including a silicon-based active material, the silicon-based active material includes one or more selected from the group consisting of SiOx (x=0) and SiOx (0<x<2), and the SiOx (x=0) is included in an amount of 50 parts by weight or more on the basis of 100 parts by weight of the silicon-based active material.

In an exemplary embodiment of the present application, the negative electrode current collector layer generally has a thickness of 1 µm to 100 µm. Such negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, a thickness of the negative electrode current collector layer may be 1 µm or greater and 100 µm or less.

However, the thicknesses may be variously modified depending on a type and use of the negative electrode used, and are not limited thereto.

In an exemplary embodiment of the present application, the negative electrode active material layer may include a negative electrode slurry including a negative electrode active material layer composition, and the negative electrode active material layer composition may include a silicon-based active material; a negative electrode conductive material; and a negative electrode binder.

In an exemplary embodiment of the present application, the silicon-based negative electrode may be formed by applying and drying a negative electrode slurry including the negative electrode active material layer composition to one surface or both surfaces of the negative electrode current collector layer.

In this case, the negative electrode slurry may include the negative electrode active material layer composition described above, and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode active material layer composition included in the negative electrode slurry, and may mean a content of the negative electrode active material layer composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode active material layer composition is minimized to efficiently form the negative electrode active material layer.

In an exemplary embodiment of the present application, the slurry solvent may be used without limitation as long as it can dissolve the negative electrode active material layer composition, and specifically, water, acetone, or NMP may be used.

In an exemplary embodiment of the present application, the silicon-based active material may include one or more selected from the group consisting of SiOx (x=0) and SiOx (0<x<2), and may include the SiOx (x=0) in an amount of 50 parts by weight or more on the basis of 100 parts by weight of the silicon-based active material.

In another exemplary embodiment, the SiOx (x=0) may be included in amount of 50 parts by weight or more, preferably 60 parts by weight or more, more preferably 70 parts by weight or more, and most preferably 80 parts by weight or more, and 100 parts by weight or less, preferably 99 parts by weight or less, and more preferably 95 parts by weight or less on the basis of 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, on the basis of 100 parts by weight of the total silicon-based active material as described above, pure Si (SiOx (x=0)) not bonded to other particles or elements are included within the above range.

An average particle diameter (D50) of the silicon-based active material of the present invention may be 5 µm to 10 µm, specifically 5.5 µm to 8 µm, and more specifically 6 µm to 7 µm. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In the exemplary embodiment of the present application, the silicon-based active material generally has a characteristic BET specific surface area. The BET specific surface area of the silicon-based active material is preferably 0.01 to 150.0 m²/g, more preferably 0.1 to 100.0 m²/g, particularly preferably 0.2 to 80.0 m²/g, and most preferably 0.2 to 18.0 m²/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon-based active material are preferably spherical or splinter-shaped particles. Alternatively, but less preferably, the silicon-based active material may also have a fiber structure or be present in the form of a silicon-containing film or coating.

In an exemplary embodiment of the present application, the silicon-based active material may be included in an amount of 60 parts by weight or more, on the basis of 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 85 parts by weight or less on the basis of 100 parts by weight of the negative electrode active material layer composition.

The negative electrode active material layer composition according to the present application includes the conductive material and binder capable of controlling the volume expansion rate during charging and discharging even when the silicon-based active material having a significantly high capacity is used within the above range, and particularly, the charging conditions are adjusted in the activation process, resulting in prevention of the surface particle breakage and maximization of the capacity characteristics.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Formula 1, in which A is an area and P is a boundary line. [Equation 1] $4 πA / {P}^{2}$

In an exemplary embodiment of the present application, there is provided the manufacturing method of a lithium secondary battery in which the negative electrode active material layer composition includes one or more selected from the group consisting of a negative electrode conductive material and a negative electrode binder.

In the related art, it is general to use only graphite-based compounds as the negative electrode active material. However, in recent years, as the demand for high-capacity batteries is increasing, attempts to mix and use silicon-based compounds are increasing in order to increase capacity. However, in the case of a silicon-based active material, even when the characteristics of the silicon-based active material itself are partially adjusted as described above, the volume may rapidly expand during the charging/discharging, thereby causing some problems of damaging the conductive path formed in the negative electrode active material layer.

Therefore, in an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a conductive material that may be used for improving conductivity of the negative electrode, has conductivity without causing a chemical change and has a spherical or point shape. Specifically, the point-like conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 m²/g or greater and 70 m²/g or less, preferably 45 m²/g or greater and 65 m²/g or less, and more preferably 50 m²/g or greater and 60 m²/g or less.

In an exemplary embodiment of the present application, a functional group content (volatile matter) of the point-like conductive material may satisfy a range of 0.01% or more and 1% or less, preferably 0.01% or more and 0.3% or less, and more preferably 0.01% or more and 0.1% or less.

In particular, when the functional group content of the point-like conductive material satisfies the above range, a functional group is present on a surface of the point-like conductive material, so that the point-like conductive material can be smoothly dispersed in a solvent when water is used as the solvent.

In the exemplary embodiment of the present application, the point-like conductive material having the functional group content within the range is included together with the silicon-based active material, and the functional group content can be adjusted according to a degree of heat treatment of the point-like conductive material.

In an exemplary embodiment of the present application, the particle diameter of the point-like conductive material may be 10 nm to 100 nm, preferably 20 nm to 90 nm, and more preferably 20 nm to 60 nm.

In an exemplary embodiment of the present application, the conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, the average particle diameter (D50) of the planar conductive material may be 2 µm to 7 µm, specifically 3 µm to 6 µm, and more specifically 4 µm to 5 µm. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided a negative electrode active material layer composition in which the planar conductive material has D10 of 0.5 µm or greater and 1.5 µm or less, D50 of 2.5 µm or greater and 3.5 µm or less and D90 of 7.0 µm or greater and 15.0 µm or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m²/g or greater.

In another exemplary embodiment, the planar conductive material may have a BET specific surface area of 5 m²/g or greater and 500 m²/g or less, preferably 5 m²/g or greater and 300 m²/g or less, and more preferably 5 m²/g or greater and 250 m²/g or less.

In another exemplary embodiment, the planar conductive material is a planar conductive material with a high specific surface area, and the BET specific surface area may satisfy a range of 50 m²/g or greater and 500 m²/g or less, preferably 80 m²/g or greater and 300 m²/g or less, and more preferably 100 m²/g or greater and 300 m²/g or less.

In another exemplary embodiment, the planar conductive material is a planar conductive material with a low specific surface area, and the BET specific surface area may satisfy a range of 5 m²/g or greater and 40 m²/g or less, preferably 5 m²/g or greater and 30 m²/g or less, and more preferably 5 m²/g or greater and 25 m²/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In the exemplary embodiment of the present application, the linear conductive material may include SWCNT or MWCNT.

In an exemplary embodiment of the present application, the negative electrode conductive material may be included in an amount of 5 parts by weight or more and 40 parts by weight or less, on the basis of 100 parts by weight of the negative electrode active material layer composition.

In another exemplary embodiment, the negative electrode conductive material may be included in an amount of 5 parts by weight or more and 40 parts by weight or less, preferably 10 parts by weight or more and 30 parts by weight or less, and more preferably 10 parts by weight or more and 25 parts by weight or less, on the basis of 100 parts by weight of the negative electrode active material layer composition.

In an exemplary embodiment of the present application, the negative electrode conductive material may include a planar conductive material and a linear conductive material.

In an exemplary embodiment of the present application, the negative electrode conductive material may include a planar conductive material and a linear conductive material, and may include 0.01 part by weight or more and 10 parts by weight or less of the linear conductive material, and 90 parts by weight or more and 99.99 parts by weight or less of the planar conductive material, on the basis of 100 parts by weight of the negative electrode conductive material.

In another exemplary embodiment, the linear conductive material may be included in an amount of 0.01 part by weight or more and 10 parts by weight or less, preferably 0.05 part by weight or more and 5 parts by weight or less, and more preferably 0.1 part by weight or more and 3 parts by weight or less, on the basis of 100 parts by weight of the negative electrode conductive material.

In another exemplary embodiment, the planar conductive material may be included in an amount of 90 parts by weight or more and 99.99 parts by weight or less, preferably 95 parts by weight or more and 99.95 parts by weight or less, and more preferably 97 parts by weight or more and 99.9 parts by weight or less, on the basis of 100 parts by weight of the negative electrode conductive material.

In particular, in the exemplary embodiment of the present application, as the negative electrode conductive material includes the planar conductive material and the linear conductive material and the composition and ratio described above are satisfied, respectively, the lifespan characteristics of an existing lithium secondary battery are not significantly affected, and the number of points where charging and discharging are possible increases, so that output characteristics are excellent at a high C-rate.

The negative electrode conductive material according to the present application has a completely different configuration from a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the existing negative electrode active material. Specifically, the carbon-based active material that is used as the negative electrode active material may be artificial graphite or natural graphite, and refers to a material that is processed and used into a spherical or point-like shape so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high capacity characteristics with respect to storing and releasing lithium, and serves to store and release all lithium ions transferred from the positive electrode.

On the other hand, in the present application, the use of a carbon-based active material as an active material means that the carbon-based active material is processed into a point or spherical shape and used as a material for storing or releasing lithium.

That is, in an exemplary embodiment of the present application, artificial graphite or natural graphite, which is a carbon-based active material, has a point-like shape, and a BET specific surface area thereof may satisfy a range of 0.1 m²/g or greater and 4.5 m²/g or less. In addition, plate-like graphite, which is a planar conductive material, has a planar shape, and a BET specific surface area thereof may be 5 m²/g or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure in volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, the negative electrode binder may include an aqueous binder, and the negative electrode binder may be included in an amount of 5 parts by weight or more and 15 parts by weight or less on the basis of 100 parts by weight of the negative electrode active material layer composition.

In another exemplary embodiment, the negative electrode binder may be included in an amount of 5 parts by weight or more and 15 parts by weight or less, preferably 7 parts by weight or more and 13 parts by weight or less, and more preferably 10 parts by weight or more and 12 parts by weight or less, on the basis of 100 parts by weight of the negative electrode active material layer composition.

In the case of the negative electrode for a lithium secondary battery according to the present application, the silicon-based active material is used in order to maximize capacity characteristics, and volume expansion during charging and discharging is greater than when a conventional carbon-based active material is used. Compared to conventional carbon-based negative electrodes, when the silicon-based negative electrode is used, the aqueous binder is applied in the amount of the weight part described above, resulting in excellent bonding strength of the conductive material and the binder.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, negative electrode conductive material and negative electrode binder included in the negative electrode active material layer, and in particular, satisfies the range described above when the silicon-based active material according to the present application and the negative electrode conductive material are included in the specific compositions and contents, so that the electrode has appropriate ranges of electrical conductivity and resistance.

In an exemplary embodiment of the present application, the positive electrode may include a positive electrode current collector layer and a positive electrode active material layer formed on the positive electrode current collector layer and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 µm, and a surface of the current collector may be formed with microscopic irregularities to enhance adhesive force of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; a Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.3); a lithium manganese composite oxide represented by chemical formula LiMn_{2-c3}M_{c3}O₂ (where M is at least one selected from the group consisting of Co, Ni, Fe, Cr, Zn and Ta, and satisfies 0.01≤c3≤0.1) or Li₂Mn₃MO₈ (where M is at least one selected from the group consisting of Fe, Co, Ni, Cu and Zn); LiMn₂O₄ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

In an exemplary embodiment of the present application, after the step of preparing the electrode assembly including a silicon-based negative electrode, a positive electrode; and a separator, a step of inserting the electrode assembly into a battery outer can and injecting an electrolyte may be further included.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of F⁻, Cl⁻, I⁻, NO₃⁻, N(CN)₂₋, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

In an exemplary embodiment of the present application, there is provided the manufacturing method of a lithium secondary battery including a step of, after preparing the electrode assembly, activating a lithium secondary battery including the electrode assembly.

In an exemplary embodiment of the present application, there is provided the manufacturing method of a lithium secondary battery in which the activating step includes a step of charging and discharging the lithium secondary battery, and the charging includes multi-stage charging from high-rate charging to low-rate charging.

In an exemplary embodiment of the present application, the charging and discharging may be performed in a CC (Constant Current)-CV (Constant Voltage) mode. Specifically, CC (Constant Current) is a method of performing charging and discharging up to a set voltage at a constant current value, and CV (Constant Voltage) is a method of performing charging and discharging up to a set current at a constant voltage value.

In the manufacturing method of a lithium secondary battery according to the present application, the multi-stage charging (step rate charging) from high-rate charging to low-rate charging is performed in the activating process, thereby solving the non-uniformity in the electrode to suppress the surface cracks and the volume change while maintaining the activation process time to be the same as the conventional activation process time.

That is, the activation process is performed under specific conditions as described above, so that the durability of the lithium secondary battery manufactured therefrom can be improved and the productivity is not lowered.

In an exemplary embodiment of the present application, C-rate refers to a measure of the rate at which a battery is discharged, and is defined as the discharge current divided by the theoretical current draw under which the battery would deliver its nominal rated capacity in one hour. For example, a C-rate of 1C indicates the discharge current that discharges the battery in one hour, a rate of 2C indicates the discharge current that discharges the battery in 1/2 hour, and a rate of C/2 indicates the discharge current that discharges the battery in 2 hours.

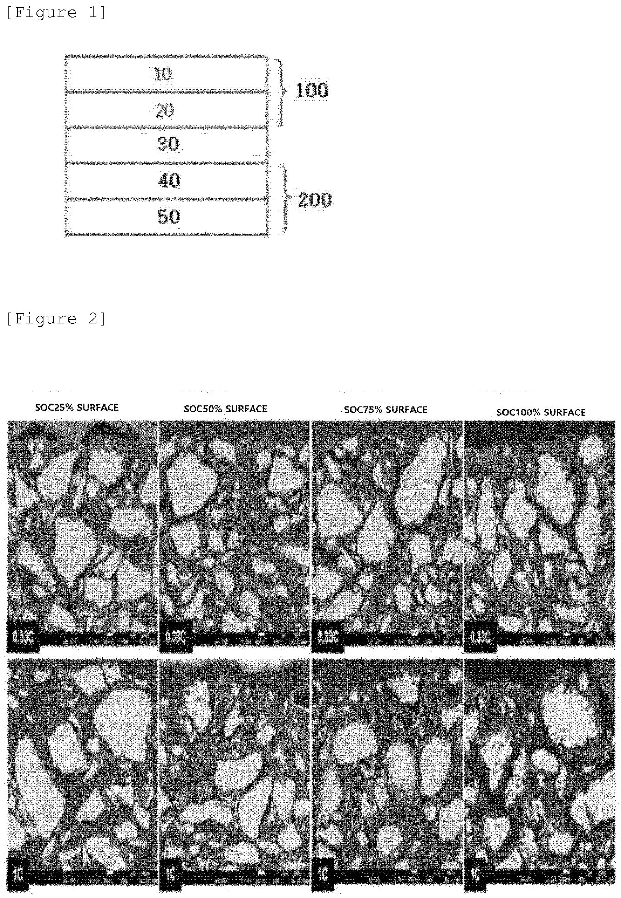

FIG. 2 shows a degree of particle breakage on an electrode surface according to SOC % during an activation process of high-rate charging and low-rate charging. Specifically, as can be seen in FIG. 2, it can be confirmed that the particle breakage on the electrode surface did not occur at 0.33C (low-rate charging) or 1C (high-rate charging) in the early stage of SOC, and that the particle breakage on the electrode surface was intensified during the high-rate charging, as compared with the low-rate charging, in the middle and late stages of SOC.

That is, it is confirmed in FIG. 2 that there was no difference in surface particle breakage even when the charging was performed at a high rate or low rate during the early charging in the activation process, and that the particle breakage occurred when the high-rate charging was performed after the early charging. Accordingly, it can be confirmed that, in the activation process according to the present application, a method of performing high-rate charging during the early charging and then low-rate charging is applied to minimize the surface particle breakage due to the charging and discharging, and that the productivity is not lowered because the high-rate charging is applied in the early stage to enable the same amount of time as in the conventional activation process to be consumed.

In an exemplary embodiment of the present application, there is provided the manufacturing method of a lithium secondary battery in which the multi-stage charging includes first charging up to SOC 25% and second charging after the SOC 25% charging, and in which the first charging includes performing charging at a constant current of 0.5C or higher.

That is, the first charging may mean high-rate charging in the early stage.

In an exemplary embodiment of the present application, the first charging may include performing charging at a constant current of 0.9C or higher.

In an exemplary embodiment of the present application, the first charging may include performing charging at a constant current of 0.5C or higher, preferably 0.7C or higher, and more preferably 0.9C or higher, and 1.2C or lower.

As described above, during the first charging, the high-rate constant current range described above is applied, and as described above, no breakage of the surface particle occurs in the early stage of the SOC, regardless of high-rate or low-rate charging. The high-rate charging can shorten the activation process time itself, and therefore, even when the low-rate charging is performed in the late stage of the SOC, the problem concerning productivity does not occur. In addition, during the first charging, the charging is performed at a constant current satisfying the range described above, so that a stabler battery can be formed, as compared with a case in which the current is lowered during the first charging. However, a problem occurs because the process takes a lot of time.

In an exemplary embodiment of the present application, there is provided the manufacturing method of a lithium secondary battery in which the charging (second charging) after the SOC 25% charging includes performing charging at a constant current of 0.5C or lower. In the present application, the charging after the SOC 25% charging may be the same as the second charging.

That is, the second charging may mean low-rate charging.

In an exemplary embodiment of the present application, the charging after the SOC 25% charging may include performing charging at a constant current of 0.5C or lower, preferably 0.4C or lower, and more preferably 0.35C or lower, and 0.1C or higher.

That is, it can be confirmed that the particle breakage on the electrode surface occurred according to the activation C-rate after the SOC 25% charging, and the particle breakage on the electrode surface can be minimized by adjusting the charging after the SOC 25% charging to the constant current range described above.

In an exemplary embodiment of the present application, the multi-stage charging may include first charging up to SOC 25%, second-first charging from SOC 25% to SOC 75%, and second-second charging after SOC 75% charging, in which the second-first charging may include performing charging at a constant current of 0.3C or higher and 0.5C or lower, and the second-second charging may include performing charging at a constant current of 0.1C or higher and 0.3C or lower.

In summary, the main feature of the present invention is that the charging in the activation process according to the present application is divided into multi-stage charging according to the step rate, and the charging is changed from high-rate charging to low-rate charging according to the degree of charging to solve the existing problem.

In an exemplary embodiment of the present application, there is provided the manufacturing method of a lithium secondary battery in which an activation time of the activating step is 10 hours or shorter.

In another exemplary embodiment, the activation time of the activating step may satisfy a range of 10 hours or shorter, preferably 9 hours or shorter, and more preferably 8 hours or shorter, and 3 hours or longer, and preferably 3.5 hours or longer.

That is, the lithium secondary battery according to the present application is obtained by changing the charging conditions in the activation process, as described above, and the charging in the activation process includes multi-stage charging from high-rate charging to low-rate charging, resulting in the minimization of surface particle breakage, and an improvement in productivity due to the above-described activation time.

Another exemplary embodiment provides a lithium secondary battery manufactured by the manufacturing method of a lithium secondary battery according to the present application.

FIG. 1 shows a laminated structure of a lithium secondary battery according to an illustrative example not forming part of the present invention. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a laminated structure with a separator 30 interposed therebetween.

An illustrative example not forming part of the present invention provides a battery module including the lithium secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

### PREFERRED MODE FOR CARRYING OUT THE INVENTION

Hereinafter, preferred examples will be provided for better understanding of the present invention. It will be apparent to one skilled in the art that the examples are only provided to illustrate the present invention and various modifications and alterations are possible within the scope of the present invention. Such modifications and alterations naturally fall within the scope of claims included herein.

### <Manufacture Example>

### <Manufacture of Lithium Secondary Battery>

### <Manufacture of Negative Electrode>

Si (average particle diameter (D50): 3.5 µm) serving as a silicon-based active material, a first conductive material, a second conductive material, and polyacrylamide (PAM) serving as a binder were added to distilled water serving as a solvent for formation of a negative electrode slurry in a weight ratio of 70:10:0.315:9.685 to manufacture a negative electrode slurry (solid concentration: 25 wt.%).

The first conductive material was plate-shaped graphite (specific surface area: 17m²/g, average particle diameter (D50): 3.5 µm), and the second conductive material was SWCNT.

As a specific mixing method, after dispersing the first conductive material, the second conductive material, the binder and water at 2500 rpm for 30 minutes with a homo mixer, the silicon-based active material was added to the dispersion, which was then dispersed at 2500 rpm for 30 minutes to prepare a negative electrode slurry.

The negative electrode slurry was coated on both surfaces of a copper current collector (thickness: 8 µm) serving as a negative electrode current collector with a loading amount of 85 mg/25 cm², which was then roll-pressed, and dried in a vacuum oven at 130°C for 10 hours to form a negative electrode active material layer.

### <Manufacture of Positive Electrode>

LiNi_{0.6}Co_{0.2}Mn_{0.2}O₂ serving as a positive electrode active material(average particle diameter (D50): 15 µm), carbon black (product name: Super C65, manufacturer: Timcal) serving as a conductive material and polyvinylidene fluoride (PVdF) serving as a binder were added to N-methyl-2-pyrrolidone (NMP) serving as a solvent for formation of a positive electrode slurry in a weight ratio of 97:1.5:1.5 to manufacture a positive electrode slurry (solid concentration: 78 wt.%).

The positive electrode slurry was coated on both surfaces of an aluminum current collector (thickness: 12 µm) serving as a positive electrode current collector with a loading amount of 537 mg/25 cm², which was then roll-pressed, and dried in a vacuum oven at 130°C for 10 hours to form a positive electrode active material layer (thickness: 65 µm), which was prepared as a positive electrode (thickness of positive electrode: 77 µm, porosity: 26%).

### <Manufacture of Lithium Secondary Battery>

A lithium secondary battery was manufactured by interposing a polyethylene separator between the positive electrode and the negative electrode and injecting an electrolyte, and was subjected to the activation process under activation process conditions shown in Table 1 below.

**[Table 1]**

| | Charging | | | | | | | Discharging | |
|---|---|---|---|---|---|---|---|---|---|
| | CC (1^{st} step) | | CC (2^{nd} step) | | CC-CV (1^{st} or 3^{rd} step) | | | CC | |
| | Current (C) | Voltage (V) | Current (C) | Voltage (V) | Current (C) | Voltage (V) | Current (C) | Current (C) | Voltage (V) |
| Example 1 | 1 | 3.777 | 0.33 | 1.11 | 0.1 | 4.2 | 0.05 | 0.33 | 2.5 |
| Example 2 | 1 | 3.85 | 0.33 | 1.15 | 0.1 | 4.2 | 0.05 | 0.33 | 2.5 |
| Comparative Example 1 | - | - | - | - | 0.33 | 4.2 | 0.05 | 0.33 | 2.5 |
| Comparative Example 2 | 0.1 | 3.777 | 0.33 | 1.11 | 1 | 4.2 | 0.05 | 0.33 | 2.5 |
| Comparative Example 3 | - | - | - | - | 1 | 4.2 | 0.05 | 0.33 | 2.5 |
| Comparative Example 4 | - | - | - | - | 0.1 | 4.2 | 0.05 | 0.33 | 2.5 |
| Comparative Example 5 | 0.1 | 3.777 | 0.05 | 1.11 | 0.03 | 4.2 | 0.5 | 0.33 | 2.5 |

Table 2 below shows the time taken for the activation process when the activation process was performed under the conditions according to Table 1 in Examples and Comparative Examples and results of the evaluation of the capacity retention rate (%) after 200 cycles of the manufactured battery.

**[Table 2]**

| | Activation process time (hr) | Capacity retention rate (%) after 200 cycles (room temperature, 4.2V-3.0V, 1.0C/0.5C) |
|---|---|---|
| Example 1 | 7 | 88 |
| Example 2 | 6.5 | 84 |
| Comparative Example 1 | 7 | 83 |
| Comparative Example 2 | 6 | 80 |
| Comparative Example 3 | 4.5 | 75 |
| Comparative Example 4 | 15 | 90 |
| Comparative Example 5 | 20 | 91 |

As can be seen from the results of Table 2, the activation process according to Examples 1 and 2 of the present application proceeds in such a manner that high-rate charging is applied during the early charging and then low-rate charging is applied. That is, it can be confirmed through the evaluation of the capacity retention rate that the surface particle breakage due to the charging and discharging was minimized by applying the high-rate charging during the early charging and then applying the low-rate charging in the activation process, and it can also be confirmed that, as the same amount of time as in the conventional activation process was consumed, the productivity was not lowered when evaluating the activation process time.

As can be seen in Table 1, Comparative Example 1 and Comparative Example 3 correspond to a case (high-rate or medium-rate single charging) in which single charging, not the step rate charging, was performed until reaching 4.2 V at CC current 0.33C or 1C. In this case, it can be confirmed that the activation process time was similar to that of the Examples, but the charging was performed at a high C-rate even in the early stage of the activation process, resulting in particle breakage on the surface of the electrode and a lowering in the capacity retention rate.

Comparative Example 2 corresponds to a case in which multi-stage charging is performed in the activation process as in the present invention but the charging is performed in reverse from the low-rate charging to the high-rate charging. In this case, it can be confirmed that the time taken for the activation process was maintained similarly, but, as in Comparative Example 1, the capacity retention rate lowered due to the high C-rate even in the early stage of the activation process.

Comparative Example 4 corresponds to a case in which single charging was performed at a low C-rate in the activation process in order to increase the capacity retention rate. In this case, it can be confirmed that the capacity retention rate was excellent because the particle breakage on the electrode surface was minimized, but the activation process took a long time of 15 hours, causing problems in the mass production of batteries.

Comparative Example 5 corresponds to a case in which the activation process proceeded from the high-rate charging to the low-rate charging, but the constant current in the first charging was lower than 0.5C. In this case, it can be confirmed that the capacity retention rate was high after 200 cycles, but the process time increased to 20 hours due to the constant current of lower than 0.5C when charging up to 4.2V, so the Comparative Example could not be applied to the mass production and the efficiency of the process was very low.

That is, the activation process of the lithium secondary battery according to the present application includes the multi-stage charging process from the low-rate to the high-rate, thereby minimizing the activation process time, further minimizing the surface breakage of the negative electrode active material layer and maintaining the capacity retention rate at a high level, which can be confirmed through the comparison of the above Examples and Comparative Examples.

## Claims

1. A manufacturing method of a lithium secondary battery comprising the steps of:
preparing an electrode assembly comprising a silicon-based negative electrode (10, 20, 100), a positive electrode (40, 50, 200), and a separator (30); and
activating a lithium secondary battery comprising the electrode assembly,
wherein the activating comprises charging and discharging the lithium secondary battery,
wherein the charging comprises multi-stage charging from high-rate charging to low-rate charging,
wherein the multi-stage charging comprises first charging up to SOC 25% and second charging after the SOC 25% charging, and
**characterized in that** the first charging comprises performing charging at a constant current of 0.5C or higher.

2. The manufacturing method of claim 1, wherein the first charging comprises performing charging at a constant current of 0.9C or higher.

3. The manufacturing method of claim 1, wherein the second charging after the SOC 25% charging comprises performing charging at a constant current of 0.5C or lower.

4. The manufacturing method of claim 1, wherein an activation time of the activating is 10 hours or shorter.

5. The manufacturing method of claim 1, wherein the silicon-based negative electrode (10, 20, 100) comprises a negative electrode current collector layer (10), and a negative electrode active material layer (20) provided on one surface or both surfaces of the negative electrode current collector layer (10),
wherein the negative electrode active material layer (20) comprises a negative electrode active material layer composition comprising a silicon-based active material, and wherein the silicon-based active material comprises one or more selected from the group consisting of SiOx (x=0) and SiOx (0<x<2) and comprises the SiOx (x=0) in an amount of 50 parts by weight or more on the basis of 100 parts by weight of the silicon-based active material.

6. The manufacturing method of claim 5, wherein the silicon-based active material is included in an amount of 60 parts by weight or more on the basis of 100 parts by weight of the negative electrode active material layer composition.

7. The manufacturing method of claim 5, wherein the negative electrode active material layer composition comprises one or more selected from the group consisting of a negative electrode conductive material and a negative electrode binder.

8. The manufacturing method of claim 7, wherein the negative electrode conductive material comprises a planar conductive material and a linear conductive material.

## Patentansprüche

1. Herstellungsverfahren für eine Lithium-Sekundärbatterie, das die folgenden Schritte umfasst:
Herstellen einer Elektrodenanordnung, die eine negative Elektrode (10, 20, 100) auf Siliziumbasis, eine positive Elektrode (40, 50, 200) und einen Separator (30) aufweist; und
Formieren einer Lithium-Sekundärbatterie, die die Elektrodenanordnung aufweist,
wobei das Formieren das Laden und Entladen der Lithium-Sekundärbatterie umfasst,
wobei das Laden ein mehrstufiges Laden von einem Laden mit hoher Rate zu einem Laden mit niedriger Rate umfasst,
wobei das mehrstufige Laden ein erstes Laden bis zu SOC 25% und ein zweites Laden nach dem Laden mit SOC 25% umfasst, und
**dadurch gekennzeichnet, dass** das erste Laden das Durchführen eines Ladens mit einem konstanten Strom von 0,5 C oder mehr umfasst.

2. Herstellungsverfahren nach Anspruch 1, wobei das erste Laden das Durchführen eines Ladens mit einem konstanten Strom von 0,9 C oder mehr umfasst.

3. Herstellungsverfahren nach Anspruch 1, wobei das zweite Laden nach dem Laden mit SOC 25% das Durchführen eines Ladens mit einem konstanten Strom von 0,5 C oder weniger umfasst.

4. Herstellungsverfahren nach Anspruch 1, wobei eine Formierungszeit des Formierens 10 Stunden oder kürzer ist.

5. Herstellungsverfahren nach Anspruch 1, wobei die negative Elektrode (10, 20, 100) auf Siliziumbasis eine Negativelektroden-Stromkollektorschicht (10) und eine Negativelektroden-Aktivmaterialschicht (20) aufweist, die auf einer Oberfläche oder beiden Oberflächen der Negativelektroden-Stromkollektorschicht (10) bereitgestellt ist,
wobei die Negativelektroden-Aktivmaterialschicht (20) eine Negativelektroden-Aktivmaterialschichtzusammensetzung aufweist, die ein Aktivmaterial auf Siliziumbasis enthält, und
wobei das Aktivmaterial auf Siliziumbasis eines oder mehrere aufweist, die aus der Gruppe ausgewählt sind, die aus SiOx (x=0) und SiOx (0<x<2) besteht, und das SiOx (x=0) in einer Menge von 50 Gewichtsteilen oder mehr auf der Basis von 100 Gewichtsteilen des Aktivmaterials auf Siliziumbasis aufweist.

6. Herstellungsverfahren nach Anspruch 5, wobei das Aktivmaterial auf Siliziumbasis in einer Menge von 60 Gewichtsteilen oder mehr auf der Basis von 100 Gewichtsteilen der Negativelektroden-Aktivmaterialschichtzusammensetzung enthalten ist.

7. Herstellungsverfahren nach Anspruch 5, wobei die Negativelektroden-Aktivmaterialschichtzusammensetzung eines oder mehrere aufweist, die aus der Gruppe ausgewählt sind, die aus einem leitfähigen Negativelektrodenmaterial und einem Negativelektrodenbindemittel besteht.

8. Herstellungsverfahren nach Anspruch 7, wobei das leitfähige Negativelektrodenmaterial ein planares leitfähiges Material und ein lineares leitfähiges Material aufweist.

## Revendications

1. Procédé de fabrication d'une batterie secondaire au lithium comprenant les étapes suivantes :
préparation d'un ensemble d'électrodes comprenant une électrode négative à base de silicium (10, 20, 100), une électrode positive (40, 50, 200), et un séparateur (30) ; et
activation d'une batterie secondaire au lithium comprenant l'ensemble d'électrodes,
l'activation comprenant la charge et la décharge de la batterie secondaire au lithium,
la charge comprenant une charge multi-étapes, d'une charge à grande vitesse à une charge à faible intensité,
la charge multi-étapes comprenant une première charge jusqu'à un état de charge (SOC) de 25%, et une deuxième charge suivant l'état de charge de 25%, et
**caractérisé en ce que** la première charge comprend l'exécution d'une charge à un courant continu de 0,5 C ou supérieur.

2. Procédé de fabrication selon la revendication 1, la première charge comprenant l'exécution d'une charge à un courant continu de 0,9 C ou supérieur.

3. Procédé de fabrication selon la revendication 1, la deuxième charge suivant l'état de charge de 25% comprenant l'exécution d'une charge à un courant continu de 0,5 C ou inférieur.

4. Procédé de fabrication selon la revendication 1, un temps d'activation de l'activation étant de 10 heures ou plus court.

5. Procédé de fabrication selon la revendication 1, l'électrode négative à base de silicium (10, 20, 100) comprenant une couche collectrice de courant de l'électrode négative (10), et une couche de matière active de l'électrode négative (20) agencée sur une surface, ou les deux surfaces, de la couche collectrice de courant de l'électrode négative (10),
la couche de matière active de l'électrode négative (20) comprenant une composition de couche de matière active de l'électrode négative comprenant une matière active à base de silicium, et la matière active à base de silicium comprenant une ou plusieurs sélectionnées parmi le groupe composé de SiOx (x = 0) et SiOx (0<x<2), et comprenant le SiOx (x = 0) dans une quantité de 50 parties en poids ou davantage, sur la base de 100 parties en poids de matière active à base de silicium.

6. Procédé de fabrication selon la revendication 5, la matière active à base de silicium étant incorporée dans la proportion de 60 parties en poids, ou davantage, sur la base de 100 parties en poids de la composition de couche de matière active de l'électrode négative.

7. Procédé de fabrication selon la revendication 5, la composition de couche de matière active de l'électrode négative comprenant un ou plusieurs sélectionnés dans le groupe composé d'une matière conductrice d'électrode négative et d'un liant d'électrode négative.

8. Procédé de fabrication selon la revendication 7, la matière conductrice d'électrode négative comprenant une matière conductrice plane et une matière conductrice linéaire.
